# FASCICULE DE BREVET EUROPEEN

(11) **EP 0 903 526 B1**
(45) Date de publication et mention de la délivrance du brevet: **18.12.2002**
(21) Numéro de dépôt: 98402293.9
(22) Date de dépôt: 17.09.1998
(51) Int. Cl.: F16L 3/23, F16L 3/26

(54) **Système de supportage pour tuyauteries en galeries techniques, notamment de l'industrie nucléaire**
Stützsystem für Rohrleitungen in technischen Anlagen, insbesondere in der Nuklearindustrie
Support system for pipelines in technical installations, in particular in the nuclear industry

(30) Priorité: 18.09.1997 FR 9711629
(43) Date de publication de la demande: 24.03.1999
(73) Titulaire: COMPAGNIE GENERALE DES MATIERES NUCLEAIRES, 78140 Velizy Villacoublay (FR)
(72) Inventeur: Delouvee, Bernard, 92250 La Garenne-Colombes (FR); Potard, Philippe, 78330 Fontenay-Le-Fleury (FR)
(74) Mandataire: Le Roux, Martine

(56) Documents cités:
- GB-A- 2 019 664
- US-A- 3 787 016
- US-A- 5 039 039

## Description

La présente invention a pour objet un système de supportage pour tuyauteries en galeries techniques, notamment de l'industrie nucléaire.

Ledit système de supportage de l'invention, qui présente une structure tout à fait originale - tubulaire - généralement développée selon un concept modulaire, intervient avantageusement dans des galeries techniques où l'on trouve, dans un volume relativement réduit, une forte concentration de tuyauteries, réparties selon des nappes horizontales et/ou verticales et/ou inclinées. Il peut notamment s'agir de galeries techniques des industries chimique, pétrochimique, nucléaire, et plus particulièrement dans ce dernier contexte, par exemple, des galeries techniques dites actives d'ateliers de retraitement du combustible nucléaire irradié. Ces galeries techniques constituent, en quelque sorte, l'artère centrale desdits ateliers ; artère centrale par laquelle transitent toutes les tuyauteries de fluides actifs (fluides présentant de la radioactivité), reliant des équipements installés dans les cellules actives situées de part et d'autre, ainsi que toutes les distributions d'utilités (fluides de refroidissement, fluides de chauffage ...) depuis les salles accessibles vers les équipements situés en zone active.

Le système de supportage de l'invention est particulièrement adapté à ce contexte nucléaire (tout en étant non limité à celui-ci) dans la mesure où il peut être calculé pour être antisismique et optimisé d'une part, en terme d'organisation des études ; d'autre part, en gain sur le tonnage d'acier inox ; enfin, en terme d'organisation de chantier. Ledit système peut notamment être pré-monté ... pré-équipé de ses tuyauteries ... puis installé et complété dans un deuxième temps. L'homme du métier saisira tous les avantages dudit système de l'invention (inhérents à ses caractéristiques intrinsèques et particulièrement adaptés au contexte de l'industrie nucléaire) à la considération de la description qui suit et des figures annexées à ladite description.

Selon l'art antérieur, dans lesdites galeries techniques de l'industrie nucléaire et notamment des ateliers de retraitement, on trouve, pour supporter les tuyauteries (notamment les tuyauteries antisismiques), une structure métallique, complexe, lourde, monobloc (continue) une fois montée. Ladite structure est en fait montée quasi intégralement sur place par soudage et boulonnage, généralement au centre desdites galeries. Elle est solidarisée aux parois desdites galeries par des poutres en béton armé; ledit béton étant très ferraillé. Ladite structure, parfois qualifiée de passerelle ou charpente, est à base de profilés standards de construction mécanique, qui présentent une section, perpendiculaire à leur axe longitudinal, en forme de U ou de H (I).

Ladite structure est en fait utilisée :
- dans un premier temps (pendant la phase de construction), pour le montage des tuyauteries ;
   et
- dans un second temps (en service), pour le supportage desdites tuyauteries ainsi qu'éventuellement celui de divers petits équipements et pour l'accès auxdites tuyauteries, en cas d'interventions.

Pour être déclarées antisismiques, de telles structures de supportage doivent supporter les tuyauteries avec un pas de supportage inférieur ou égal à un pas de supportage maximum autorisé. Ce pas maximum est évidemment fonction du diamètre de la tuyauterie supportée et du fluide véhiculé. A ce jour, des prescriptions récentes, fixent à 1,5 m ce pas maximum pour les tuyauteries de petit diamètre. De telles prescriptions sont de plus en plus sévères. Pour y satisfaire, les structures de supportage de l'art antérieur, déjà lourdes, doivent être, quasi inexorablement, encore considérablement alourdies.

On a proposé, en référence aux nouvelles prescriptions, de compléter lesdites structures de supportage de l'art antérieur par des structures complémentaires de support greffées sur les poutres les solidarisant aux parois de la galerie technique. On a également proposé de compléter lesdites structures de l'art antérieur par des fers horizontaux; de tels fers horizontaux étant aussi prévus, avantageusement en décalé, fixés aux parois de la galerie technique.

Dans un tel contexte, la Demanderesse a développé un nouveau concept de système de supportage pour tuyauteries en galeries actives : concept modulaire avec des modules à base de profilés tubulaires. Les modules en question sont constitués d'un unique portique ou, avantageusement, consistent en l'association de plusieurs portiques, généralement 2 ou 3. Ceci est détaillé plus loin.

Le système de supportage de l'invention comprend, de façon caractéristique, au moins un portique, constitué non pas de profilés standards du type rappelé ci-dessus, mais de tubes métalliques. Les tubes métalliques constituant ledit portique sont soudés entre eux et agencés selon une ossature principale et des barreaux, solidarisés à ladite ossature principale ; lesdits barreaux tubulaires étant destinés à supporter les tuyauteries à axe longitudinal horizontal ou incliné.

Ladite structure tubulaire peut être amarrée au génie civil selon de nombreuses variantes, faisant généralement intervenir des pièces de fixations et/ou des soudures. Ladite structure tubulaire peut notamment être fixée par soudure à une structure métallique (charpente, bandeau ou platine pré-scellée) ou être elle-même équipée de moyens pour son ancrage sur le génie civil. De tels moyens existent sous différentes formes de réalisation et peuvent notamment comporter des platines, pièces de raccordement qui répartissent les efforts du système de supportage sur la structure béton des parois de la galerie active dans laquelle se trouve ledit système. Lesdites platines, solidarisées à l'ossature principale dudit système conviennent pour un ancrage par chevillage. Elles comportent à cette fin des marques de pointage. Lesdites marques sont utilisées pour le perçage, sur place, au diamètre des chevilles.

On se propose de préciser ci-après un mode de réalisation, avantageux et original, de tels moyens d'ancrage du type platine.

Comme indiqué ci-dessus, lesdites platines sont solidarisées à l'ossature principale du(des) portique(s) intervenant dans la structure des systèmes de supportage de l'invention et conviennent pour un ancrage par chevillage. A cette fin, elles comportent avantageusement chacune au moins une série de marques de pointage; les entraxes entre lesdites marques de pointage de ladite série ayant été calculés pour permettre assurément la pose d'au moins une cheville au travers de l'une desdites marques de pointage de ladite série ou au centre de ladite série.

Connaissant le ferraillage, voire le surferraillage du génie civil dans lequel on doit ancrer le système de supportage de l'invention, on réalise sur les platines d'ancrage (de fixation) de celui-ci au moins une série de marques de pointage adéquate de sorte que la pose d'au moins une cheville, en évitant tout fer à béton, soit possible au travers de l'une desdites marques de la série (au pire, au centre de ladite série). Avec de telles platines, on peut donc mettre en oeuvre l'ancrage du système de supportage dans des zones de références théoriques définies lors des études de supportage tout en respectant l'intégrité du ferraillage du génie civil. Pour une telle mise en oeuvre, on procède par sondage. Si le sondage au travers d'une première marque de pointage de la série interfère avec un fer à béton, on effectue un autre sondage au travers d'une autre marque de ladite série et ainsi de suite ...

Lesdites platines comportent avantageusement au moins deux séries et, de façon préférée, quatre séries de telles marques de pointage; lesdites séries étant avantageusement excentrées et/ou réparties de façon symétrique à la surface desdites platines. Ainsi, assure-t-on l'ancrage, au niveau de chaque platine, en au moins deux points, de façon préférée, en quatre points ; un tel ancrage multi-points étant avantageusement optimisé par la distribution desdits points à la surface de la platine.

Selon une variante particulièrement avantageuse, chacune desdites séries comporte quatre marques de pointage, disposées aux quatre coins d'un carré dont la longueur des côtés est supérieure au diamètre des fers du ferraillage du génie civil et inférieure à la distance entre deux fers dudit ferraillage. Dans le cadre de cette variante, on trouve, de façon préférée, quatre séries de cette sorte réparties de façon symétrique aux quatre coins d'une platine, parallélépipède droit, à base carrée, de faible épaisseur.

Les moyens d'ancrage du (des) portique(s) du système de supportage de l'invention sont donc avantageusement du type ci-dessus, pour permettre à coup sûr ledit ancrage en des zones pré-déterminées, tout en respectant l'intégrité du ferraillage desdites zones.

On en revient maintenant à la structure tubulaire du système de supportage de l'invention, plus précisément à l'unité de base de ladite structure tubulaire : le portique. Ledit portique présente, comme déjà indiqué, une ossature principale et des barreaux.

Selon un mode de réalisation préféré, ladite ossature principale est constituée de deux profilés tubulaires horizontaux et d'au moins un (avantageusement deux) profilé(s) tubulaire(s) vertical(aux). Elle se présente ainsi sous la forme d'un cadre à trois, avantageusement quatre côtés.

Les barreaux horizontaux qui complètent la structure du portique présentant une telle ossature principale peuvent être agencés de diverses façons et, notamment :
- selon une seule série, solidarisés auxdits deux profilés tubulaires verticaux de ladite ossature principale ou d'une part audit profilé tubulaire vertical (unique) de ladite ossature principale et d'autre part à un autre profilé tubulaire vertical solidarisé à ladite ossature principale (ledit autre profilé tubulaire intervenant pour "fermer" le cadre à trois côtés) ;
- selon deux séries adjacentes, solidarisés auxdits profilés tubulaires verticaux de ladite ossature principale et à un autre profilé tubulaire vertical intermédiaire (prévu entre lesdits profilés tubulaires verticaux de ladite ossature principale) solidarisé à ladite ossature principale, ou, solidarisés audit profilé tubulaire vertical (unique) de ladite ossature principale et à deux autres profilés tubulaires verticaux solidarisés à ladite ossature principale (l'un fermant le cadre, l'autre pouvant être qualifié d'intermédiaire) ;
- selon plus de deux séries adjacentes, solidarisés au(x)dit(s) profilé(s) tubulaire(s) vertical(aux) de ladite ossature principale et à des profilés tubulaires verticaux complémentaires solidarisés à ladite ossature principale (dans ce cas de figure, on observe au moins une série dont les barreaux ne sont solidarisés qu'à des profilés verticaux complémentaires intermédiaires, et ne sont donc plus directement solidarisés à l'ossature principale).

Avantageusement, les barreaux de séries adjacentes ne sont pas situés aux mêmes niveaux. Des répartitions différentes des barreaux au sein de telles séries adjacentes sont préconisées pour des questions d'encombrement des nappes de tuyauteries horizontales et/ou inclinées destinées à être supportées par lesdits barreaux. On n'exclut pas que sur deux séries adjacentes certains barreaux desdites deux séries puissent se trouver au même niveau.

Dans le cadre de ce mode de réalisation, les deux profilés tubulaires horizontaux de ladite ossature principale présentent avantageusement une extrémité libre à laquelle sont fixés des moyens d'ancrage de ladite ossature dans le génie civil. Lesdits moyens d'ancrage sont de préférence du type avantageux précisé ci-dessus (platines avec série(s) de marques de pointage).

D'une manière générale, le portique constituant le système de supportage de l'invention, ou au moins l'un des portiques intervenant dans la structure du système de supportage de l'invention est avantageusement agencé, en partie basse, pour permettre la pose d'une structure plancher, notamment du type caillebotis. On peut ainsi prévoir que le profilé tubulaire horizontal bas de l'ossature principale du mode de réalisation décrit en détail ci-dessus présente, à cette fin, une extrémité libre.

Ledit profilé tubulaire horizontal bas présente ainsi avantageusement deux extrémités libres, l'une à laquelle sont fixés des moyens d'ancrage de la structure dans le génie civil, l'autre sur laquelle peut être disposée une structure plancher ...

Le mode de réalisation, tel que décrit ci-dessus, du portique du système de supportage de l'invention, convient tout particulièrement pour un ancrage dudit portique sur une paroi verticale. L'homme du métier concevra aisément qu'il peut être ancré sur une paroi horizontale du type plancher voire plafond, la nomenclature de son ossature principale et de ses barreaux étant simplement à revoir.

On a parlé plus haut dans le présent texte du concept modulaire du système de supportage de l'invention. Ce concept se décline en plusieurs versions; le module de base pouvant être constitué d'un unique portique tubulaire tel que décrit ci-dessus ou d'au moins deux portiques de ce type. Avantageusement, dans le cadre de la présente invention, on associe au moins deux portiques, voire au moins trois portiques. Ainsi, le système de supportage pour tuyauteries de l'invention se présente-t-il avantageusement sous la forme de modules mono-portique, bi-portiques ou tri-portiques (tubulaire(s)), modules dont la distribution sera optimisée au sein d'une galerie active. L'association de plus de trois portiques est nullement exclue du cadre de l'invention mais elle se révèle une variante peu avantageuse.

Les modules pluri-portiques sont obtenus par solidarisation de portiques indépendants. Pour cette solidarisation, mise en oeuvre par soudage ou par tout autre moyen, on peut faire intervenir des structures métalliques horizontales qui jouent le rôle de raidisseurs. Lesdites structures métalliques ou raidisseurs sont avantageusement des tubes. Ainsi, selon une variante avantageuse de l'invention, le système de supportage n'inclut-il que des tubes métalliques, agencés en portiques ou en unités de plusieurs portiques. Les raidisseurs qui lient entre eux plusieurs portiques rigidifient efficacement l'ensemble. De plus, ils conviennent pour supporter des nappes de tuyauteries verticales.

Lesdits raidisseurs ont évidemment leur longueur adaptée à l'espacement souhaité entre deux portiques. Ledit espacement, en référence aux normes antisismiques, doit être inférieur ou égal à une valeur maximale. On utilise généralement des raidisseurs dont la longueur correspond à ladite valeur maximale. Il n'est toutefois nullement exclu, dans des zones sensibles, d'utiliser des raidisseurs plus courts et dans des zones beaucoup moins sensibles, des raidisseurs plus longs. Par la longueur desdits raidisseurs, on fixe le pas de supportage d'un tuyau dans un système de supportage de l'invention comportant plusieurs portiques (ledit pas de supportage est égal à l'espacement entre deux portiques adjacents).

Dans une zone où n'interviendrait que des systèmes de supportage monoportique, ledit pas de supportage correspond à l'espacement entre les portiques.

L'homme du métier aura déjà saisi tout l'intérêt du système de supportage de l'invention qui, à base de tubes métalliques, est optimisé en termes de poids, de résistance au séisme, de dilatation thermique, d'inertie ... De plus, la déclinaison dudit système selon des modules qui englobent plusieurs portiques, offre des possibilités intéressantes. Ledit système peut ainsi être pré-monté et pré-équipé de ses tuyauteries. En effet, des systèmes à 2, 3 voire 4 portiques peuvent être amenés sur le site pré-équipés de tuyauteries ; lesdites tuyauteries étant avantageusement réparties selon des nappes horizontales et/ou inclinées et/ou verticales.

Ces notions de pré-montage et de pré-équipement sont très importantes au vu de la nature et des dimensions des sites dans lesquels on est généralement amené à installer les systèmes de supportage de tuyauteries.

On a déjà compris ici que l'invention bouleverse complètement le concept classique du supportage de tuyauteries en galerie active en proposant des structures tubulaires, simples, légères, indépendantes (à généralement 1, 2 ou 3 portiques), éventuellement pré-montées voire pré-équipées de tuyauteries en lieu et place de structures complexes, lourdes , monobloc, à monter obligatoirement quasi intégralement sur place.

On propose par ailleurs des moyens avantageux pour assembler les tuyauteries supportées au système de supportage original de l'invention. En effet, lesdites tuyauteries (horizontales et/ou inclinées et/ou verticales, prises individuellement ou en nappes) ne sont évidemment pas simplement posées au contact des tubes support mais solidarisées à ceux-ci. Des moyens de solidarisation, de type divers (plus ou moins sophistiqués, selon la sévérité du cahier des charges à respecter), connus de l'homme du métier, peuvent intervenir. On préconise tout particulièrement l'intervention de moyens de solidarisation ou moyens d'assemblage tels que définis ci-après. De tels moyens - antisismiques - ont été mis au point par la Demanderesse et font l'objet d'une demande de brevet parallèle. Ainsi, le système de supportage original de l'invention est-il avantageusement équipé de moyens d'assemblage tube support / tuyauterie supportée qui comprennent :
- une embase sensiblement plane, avantageusement parallélépipédique, disposée entre ledit tube support et ladite tuyauterie supportée ; ladite embase étant percée d'au moins deux trous ;
- des premiers moyens de liaison à serrage réglable entre l'un des tubes : tube support, tuyauterie supportée et ladite embase ; lesdits premiers moyens de liaison entourant partiellement au moins un tronçon dudit tube et coopérant avec lesdits trous ;
- des deuxièmes moyens de liaison entre l'autre desdits tubes : tube support, tuyauterie supportée et ladite embase ; lesdits deuxièmes moyens de liaison entourant partiellement au moins un tronçon dudit autre tube et coopérant avec lesdits trous et avec lesdits premiers moyens de liaison.

On comprend que, grâce à l'utilisation des mêmes trous de l'embase pour le montage des premiers moyens de liaison et des deuxièmes moyens de liaison, chacun d'entre eux entourant partiellement au moins un tronçon de l'un des tubes, il existe une bonne fixation et une bonne cohésion du dispositif d'assemblage préconisé qui présente ainsi une inertie satisfaisante pour la tenue au séisme.

De plus, l'utilisation de supports tubulaires (tubes métalliques d'un portique ou raidisseurs) renforce la symétrie du montage entre le support et la tuyauterie et permet d'incliner à volonté la tuyauterie autour de son support.

Selon un mode préféré de mise en oeuvre, lesdits premiers moyens de liaison comprennent au moins un étrier comportant un arceau plat en forme de U entourant partiellement un des tubes et dont les extrémités sont au contact ou à proximité de l'embase et un arceau de serrage enserrant ledit arceau plat sur tout son contour extérieur, chaque extrémité dudit arceau de serrage traversant ladite embase au travers d'un desdits trous et présentant des moyens de serrage dudit arceau de serrage par rapport audit arceau plat et lesdits deuxièmes moyens de liaison comprennent au moins un collier plat dont chacune des extrémités est fixée à l'embase au niveau d'un desdits trous au moyen de l'extrémité correspondante dudit arceau de serrage.

Par ailleurs, il est prévu que, de préférence, chacune des extrémités du collier plat forme une patte de liaison qui comprend une ouverture destinée à être disposée en regard d'un trou de l'embase.

Selon un mode préféré de réalisation, les moyens de serrage de l'arceau de serrage des premiers moyens de liaison comprennent des filetages destinés à traverser l'embase au travers des trous et à coopérer avec des écrous de serrage.

Selon une variante avantageuse :
- le collier plat des deuxièmes moyens de liaison est en forme de Ω ( il comporte une partie centrale en forme de U aux extrémités de laquelle sont raccordées, de préférence sensiblement à 90°, des pattes de liaison, de préférence rectangulaires et planes) ;
- l'embase possède quatre trous la traversant de part en part suivant une direction parallèle à l'axe Z ; les axes X, Y, Z, deux à deux orthogonaux, représentant respectivement
   * l'axe du tube support ;
   * l'axe de la tuyauterie supportée ;
   * un axe orthogonal auxdits axes du tube support et de la tuyauterie supportée ;
- le dispositif d'assemblage possède deux étriers et deux colliers plats.

Dans le cadre de cette variante avantageuse, on a de préférence, lesdits trous (de l'embase), étriers et colliers disposés de façon symétrique ; les plans (X,Z) et (Y,Z) formant alors des plans de symétrie du dispositif.

On comprend que ce mode préférentiel de réalisation entraîne une structure symétrique permettant une meilleure fixation de l'ensemble, qu'il existe alors une possibilité d'avoir ou de ne pas avoir de serrage des différents éléments lors du montage ainsi qu'une possibilité de faire varier l'inclinaison du dispositif d'assemblage en fonction de la pente de la tuyauterie et/ou du support.

De préférence, le dispositif d'assemblage est utilisé pour supporter des tuyauteries sur un support horizontal mais on comprend que le dispositif d'assemblage selon l'invention permet également d'autres configurations telles que l'assemblage d'une tuyauterie horizontale ou légèrement inclinée (l'angle d'inclinaison valant, par exemple, 2°) sur un tube support disposé verticalement ou bien un assemblage entre une tuyauterie et un tube support formant entre eux un plan possédant n'importe quelle orientation, pourvu que la tuyauterie et le tube support forment entre eux un angle sensiblement égal à 90°.

On peut réaliser différentes variantes du dispositif d'assemblage préconisé, afin que celui-ci permette soit un mouvement relatif de translation entre tuyauterie supportée et tube support (guidage longitudinal, transversal ou les deux à la fois), soit un blocage total entre tuyauterie supportée et tube support. Pour cela, dans le cadre du mode préféré de mise en oeuvre du dispositif d'assemblage précisé ci-dessus, on modifie notamment les dimensions de l'arceau plat, celles-ci conditionnant l'existence ou non du serrage de l'étrier autour du tube (support ou tuyauterie supportée) : un arceau plat présentant des dimensions plus importantes que le diamètre du tube entouré crée un jeu et permet une liberté de mouvement du tube entouré par l'étrier comportant cet arceau plat. Si l'on désire obtenir une possibilité de mouvement entre le collier plat et le tube qu'il entoure, on prévoit alors une pièce supplémentaire ou cale qui éloigne le fond du collier plat de l'embase et crée un jeu entre l'embase et le tube entouré par ce collier plat. On peut également entourer le tube support par l'étrier et la tuyauterie supportée par le collier plat ou, inversement, entourer le tube support par le collier plat et la tuyauterie supportée par l'étrier.

On précise ci-après quatre variantes de réalisation du dispositif d'assemblage préconisé entre une tuyauterie supportée et un élément tubulaire du système de supportage de l'invention :
1^{ère} variante
   Selon celle-ci :
   - les étriers entourent la tuyauterie supportée et les arceaux plats desdits étriers sont dimensionnés de sorte que lorsque leurs extrémités sont en contact avec l'embase, ladite tuyauterie supportée peut coulisser dans lesdits étriers ;
      et
   - les colliers, entourant le tube support, sont conformés de sorte que, lorsque leurs pattes de liaison sont plaquées contre l'embase, par les écrous de serrage montés sur les extrémités filetées des arceaux de serrage, ledit tube support est bloqué.

   Cette variante autorise un degré de liberté, à la tuyauterie supportée, selon une translation longitudinale par rapport à son axe.
2^{ème} variante
   Selon celle-ci :
   - les étriers entourent le tube support et les arceaux plats desdits étriers sont dimensionnés de sorte que lorsque leurs extrémités sont en contact avec l'embase, ledit tube support peut coulisser dans lesdits étriers ;
      et
   - les colliers entourant la tuyauterie supportée, sont conformés de sorte que lorsque leurs pattes de liaison sont plaquées contre l'embase, par les écrous de serrage montés sur les extrémités filetées des arceaux de serrage, ladite tuyauterie supportée est bloquée.

   Cette variante autorise un degré de liberté, à la tuyauterie supportée, selon une translation transversale par rapport à son axe.
3^{ème} variante
   Selon celle-ci :
   - les étriers entourent la tuyauterie supportée et il intervient en outre une cale percée, interposée entre chaque patte de liaison des colliers plats (entourant le tube support) et l'embase et traversée par les extrémités filetées des arceaux de serrage, de façon que, lorsque le tube support est plaqué contre le fond du collier plat, il existe un jeu de montage entre ledit tube support et l'embase permettant un coulissement du dispositif d'assemblage le long dudit tube support ;
      et
   - les arceaux plats desdits étriers sont dimensionnés de sorte que lorsque leurs extrémités sont en contact avec l'embase, la tuyauterie supportée peut coulisser dans lesdits étriers.

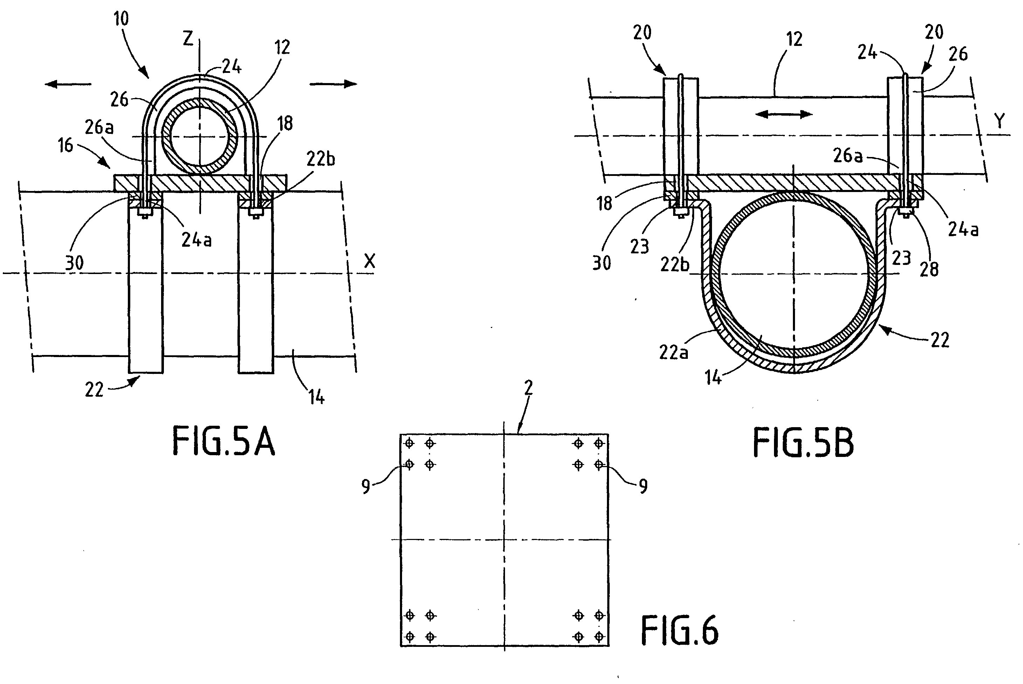

   Cette variante (illustrée sur les figures 5A et 5B annexées) autorise deux degrés de liberté, en translation, à la tuyauterie supportée.
4^{ème} variante
   Selon celle-ci :
   - les étriers entourent la tuyauterie supportée et les arceaux plats desdits étriers sont dimensionnés de sorte que lorsque leurs extrémités sont à proximité ou en contact avec l'embase, ladite tuyauterie est bloquée par lesdits étriers ;
      et
   - les colliers, entourant le tube support, sont conformés de sorte que lorsque leurs pattes de liaison sont plaquées contre l'embase, par les écrous de serrage montés sur les extrémités filetées des arceaux de serrage, le tube support est bloqué.

Cette variante n'autorise aucun degré de liberté à la tuyauterie supportée. Cette dernière est parfaitement bloquée sur le tube support.

L'invention est maintenant décrite, en référence aux figures annexées, sur lesquelles :
- Figure 1 est une vue en perspective d'un système de supportage, mono-portique de l'invention ;
- Figure 2 est une vue en perspective d'un système de supportage à trois portiques de l'invention, pré-équipé de nappes de tuyauteries ;
- Figure 3 est une vue schématique en perspective d'un dispositif d'assemblage tube support (du système de supportage) / tuyauterie supportée, préconisé dans le cadre de l'invention ;
- Figures 4A et 4B représentent, respectivement en vue de face et de côté, les premiers moyens de liaison (l'étrier) dudit dispositif d'assemblage de la figure 3 entourant un tube de diamètre D1 (diamètre extérieur) ;

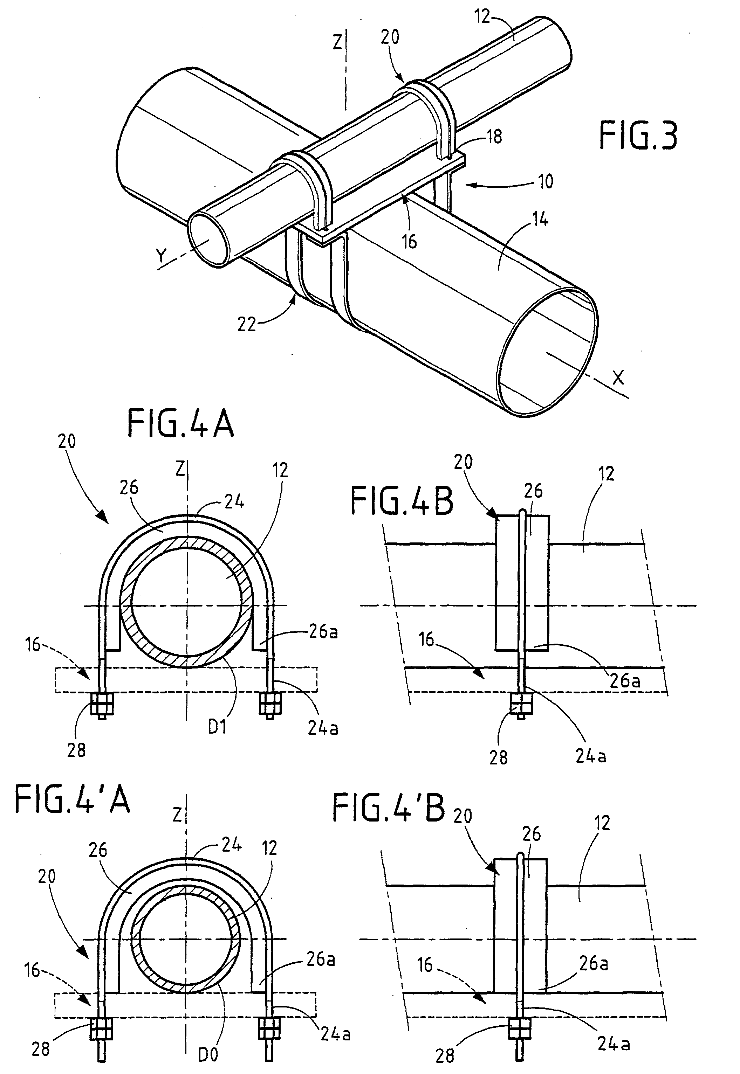

- Figures 4'A et 4'B sont des vues similaires à celles des figures 4A et 4B dans le cas où le tube entouré présente un diamètre D0 (diamètre extérieur) beaucoup plus petit que D1 ;
- Figures 5A et 5B représentent, respectivement en vue de face et de côté, une forme particulière de réalisation d'un dispositif d'assemblage tube support (du système de supportage) / tuyauterie supportée, préconisé dans le cadre de l'invention ;
- Figure 6 est une vue de face d'une platine d'ancrage, d'un système de supportage de l'invention, dans le génie civil.

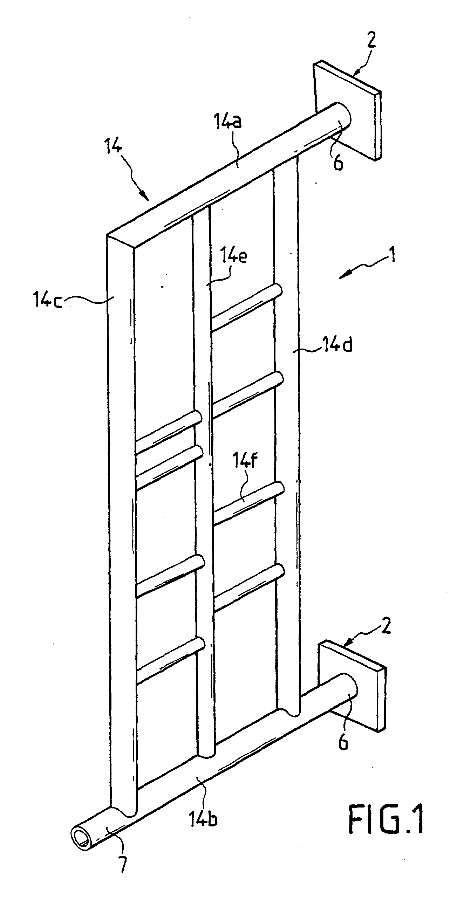

Le système de supportage de l'invention, représenté sur la figure 1, comporte un unique portique 1 constitué de tubes métalliques 14, soudés entre eux. L'ossature principale dudit portique 1 est constituée :
- de deux tubes horizontaux 14a et 14b, munis à leur extrémité libre 6 de platines d'ancrage 2 dans le génie civil. Le tube horizontal inférieur 14b est prolongé en 7, pour permettre la pose d'une structure plancher ;
- de deux tubes verticaux 14c et 14d.

Un autre tube vertical 14e intervient de sorte que les barreaux 14f se déclinent selon deux séries.

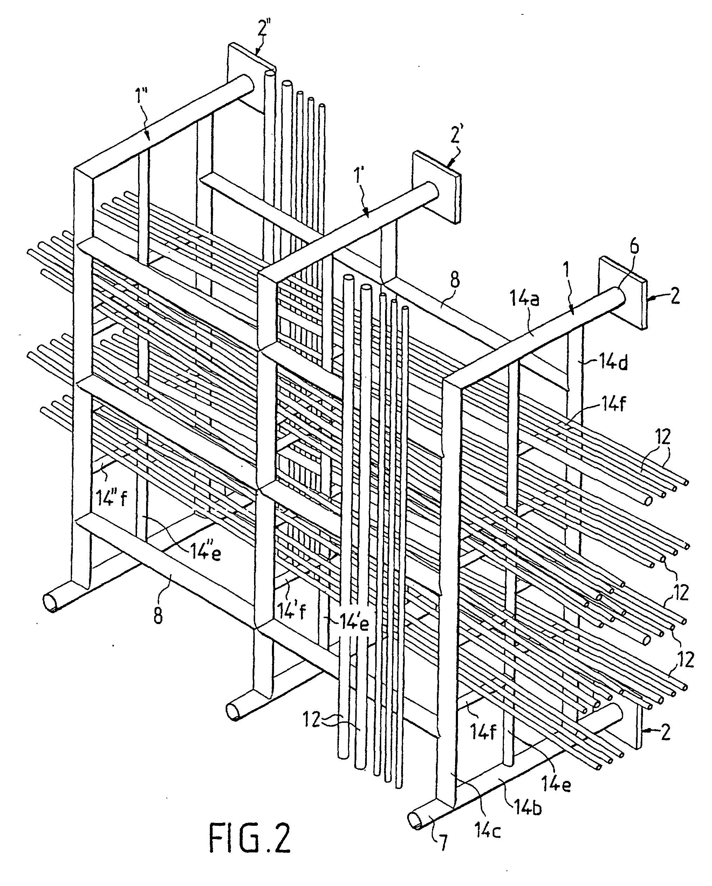

Le système de supportage de l'invention, représenté sur la figure 2, comporte trois portiques 1, 1', 1'', du type de celui représenté sur la figure 1. Lesdits trois portiques 1, 1', 1" sont solidarisés entre eux par les raidisseurs horizontaux 8 (tubes). On a montré, sur ladite figure 2, des nappes horizontales, inclinées, verticales de tuyauteries 12, disposées au sein dudit système de supportage de l'invention.

On décrit maintenant en référence à la figure 3 un dispositif d'assemblage 10 préconisé dans le cadre de la présente invention, pour solidariser une tuyauterie 12 à un tube support 14 (élément d'un système de supportage de l'invention).

Sur ladite figure 3, les deux tubes 12 et 14 sont placés horizontalement mais on conçoit tout à fait que les deux axes X et Y puissent présenter n'importe quelle autre orientation sans pour autant que le dispositif d'assemblage 10 soit modifié.

Selon le mode de réalisation préféré et représenté sur ladite figure 3, le dispositif d'assemblage 10 comporte une embase 16 parallélépipédique rectangulaire percée de quatre trous 18 ; cette embase 16 ayant sa longueur et sa largeur respectivement parallèles aux axes Y et X des tubes et étant placée, entre la tuyauterie supportée 12 et le tube support 14. Le dispositif d'assemblage 10 comprend également deux étriers 20 entourant chacun un tronçon de la tuyauterie 12 et deux colliers plats 22 (en forme de Ω) entourant chacun un tronçon du tube support 14, les extrémités des étriers 20 et des colliers plats 22 étant reliées entre elles et à l'embase 16 au moyen des trous 18 comme il est décrit plus en détail par la suite.

On se reporte maintenant aux figures 4A et 4B qui illustrent de façon plus détaillée un étrier 20. Chaque étrier 20 se compose, d'une part, d'un arceau de serrage 24 à section circulaire constituant un cavalier destiné à entourer un tronçon de l'un des tubes et dont les extrémités 24a, rectilignes et filetées, sont destinées à traverser deux des trous 18 de l'embase 16 et à coopérer avec des écrous de serrage 28 et, d'autre part, d'un arceau plat 26 constituant une fourrure disposée entre le tube et l'arceau de serrage 24.

Comme on peut le voir de façon plus précise sur les figures 4A et 4'A, selon le diamètre du tube entouré par l'étrier 20 et la taille de l'arceau plat 26, on peut prévoir ou non un certain jeu entre ledit tube et ledit arceau plat 26.

Dans le cas des figures 4A et 4B, le tube 12 possède un grand diamètre D1 égal à l'écart séparant les branches rectilignes du U de l'arceau plat 26. Ledit diamètre D1 est plus grand que la distance séparant les extrémités 26a de l'arceau plat 26 du fond du U. Un tronçon de la surface externe du tube 12, dont la section constitue le demi-cercle supérieur du tube 12, est en contact avec l'intérieur de l'arceau plat 26, dans la partie supérieure de l'arceau plat 26 formant la base arrondie du U. La partie inférieure du tube 12 est en contact avec l'embase 16, représentée en traits pointillés sur la figure 4A, selon une portion de génératrice du tube 12. Dans ce cas de figure, le tube 12 est bloqué par l'étrier 20 dont la fixation est effectuée par le montage des écrous de serrage 28 sur les extrémités filetées 24a de l'arceau de serrage, les écrous 28 étant serrés pour bloquer ledit tube 12 entre l'embase 16 et l'étrier 20; les branches rectilignes du U de l'arceau plat 26 étant d'une longueur telle que leurs extrémités 26a ne sont pas en contact avec l'embase 16.

Dans le deuxième cas de figure représenté sur les figures 4'A et 4'B, le diamètre D0 du tube 12 est (plus petit que D1) plus petit que la distance séparant les extrémités 26a de l'arceau plat 26 du fond du U. Lors du montage de l'étrier 20, en serrant les écrous 28 sur les extrémités filetées 24a de l'arceau de serrage 24, il existe une position limite correspondant au moment où les extrémités 26a de l'arceau plat 26 entrent en contact avec l'embase 16 de sorte que les écrous 28 sont bloqués et que le tube 12 n'est pas monté de façon serrée dans l'étrier 20 puisqu'il existe un jeu entre ledit tube 12 (de diamètre extérieur D0) et l'arceau plat 26. Dans le cas illustré sur les figures 4'A et 4'B, le jeu est présent à la fois entre le tube 12 et les branches rectilignes de l'arceau plat 26, et entre le tube 12 et l'ensemble constitué par l'embase 16 et la base arrondie du U de l'arceau plat 26.

On comprend, d'après les explications précédentes, que le serrage de l'étrier 20 sur le tube qu'il entoure est conditionné par les dimensions de l'arceau plat 26, c'est-à-dire le diamètre de la base arrondie du U, d'une part, et la longueur des branches du U, d'autre part, en fonction du diamètre du tube, de sorte que l'arceau plat 26 transmet ou non au tube concerné le serrage de l'arceau de serrage 24 disposé autour dudit tube. De plus, l'arceau plat 26 constitue une fourrure de protection du tube puisqu'il empêche la déformation de la surface externe du tube qui est en contact avec l'étrier 20, en répartissant les efforts de compression engendrés par l'arceau de serrage 24, sur une portion de la périphérie d'un tronçon de tube correspondant à la largeur de l'arceau plat 26.

A des fins de comparaison, on a représenté, sur les figures 4A et 4A', deux diamètres possibles (respectivement D1 et D0, avec D1>D0) pour le tube 12, tuyauterie supportée ou tube support. Il est bien évident que l'on adapte, dans la pratique, les dimensions des premiers moyens de liaison à celle du tube 12 concerné et non l'inverse.

Le diamètre (extérieur) dudit tube 12 est en fait imposé par des contraintes, notamment par le débit du fluide circulant dans ledit tube (12) (cas d'une tuyauterie supportée) et par l'épaisseur de la paroi dudit tube (12) et/ou par la résistance de la structure (cas d'une tuyauterie supportée et d'un tube support). Ledit diamètre étant fixé, on adapte les dimensions desdits premiers moyens de liaisons - notamment celles de l'arceau plat 26 - audit diamètre, selon les degrés de liberté recherchés. Pour générer un jeu entre ledit arceau plat et le tube qu'il entoure, voire pour répartir un tel jeu, de façon dissymétrique par rapport aux deux axes dudit tube, on dispose de deux paramètres :
- le diamètre interne (de la partie circulaire) de l'arceau plat;
- la longueur des branches rectilignes dudit arceau plat.

Ainsi, en choisissant un étrier 20 comportant un arceau plat 26 de longueur et de diamètre adaptés, on peut prévoir un montage serré du tube dans l'étrier 20 de sorte que ce tube ne présente aucun degré de liberté ou bien prévoir un arceau plat 26 plus grand qui permette un certain jeu entre le tube et l'étrier 20 de sorte que ce tube puisse coulisser dans l'étrier ce qui lui accorde un degré de liberté en translation selon son propre axe.

Le dispositif d'assemblage 10 proposé comprend, de préférence (comme montré sur les figures annexées), deux étriers 20 et deux colliers plats 22 disposés de façon à former un ensemble symétrique par rapport aux plans (X, Z) et (Y, Z) ; les axes (X, Y, Z) étant orthogonaux entre eux. Dans cette configuration, les plans médians de chaque couple de colliers 22 ou d'étriers 20 sont écartés l'un de l'autre d'une distance supérieure au diamètre du tube que ce couple n'entoure pas.

On se reporte maintenant aux figures 5A et 5B qui illustrent une variante de réalisation du dispositif d'assemblage 10 selon la figure 3 dans laquelle on cherche à obtenir pour la tuyauterie supportée 12 deux degrés de liberté correspondant à deux translations, respectivement selon des directions parallèles aux axes X et Y. Cette variante de réalisation est obtenue avec intervention d'une cale 30 percée, entre les pattes de liaison 22b de chaque collier 22 (en forme de Ω) et l'embase 16; le perçage de cette cale 30 étant positionné pour se placer, lors du montage, en regard et dans le prolongement de l'ouverture 23 d'une patte de liaison 22b et d'un trou 18 de l'embase 16. Quatre cales percées 30 sont ainsi nécessaires dans le cas particulier illustré sur les figures 5A et 5B mais on peut envisager d'autres variantes telles que l'utilisation de deux cales fines et longues comprenant deux perçages correspondant aux extrémités des deux colliers plats 22 situées du même côté du tube 14 (cette variante particulière modifierait la figure 5A en reliant les deux cales 30 visibles qui ne formeraient alors qu'une seule cale, la figure 5B n'étant alors pas modifiée).

De cette manière, on obtient un support libre pour des tuyauteries posées. En effet, ces cales 30 engendrent un jeu entre le tube support 14 (figure 5B) et l'ensemble embase 16, colliers plats 22, qui est égal à l'épaisseur desdites cales 30.

On précise ici à toutes fins utiles que d'autres configurations structurelles peuvent être envisagées pour le dispositif d'assemblage préconisé entre une tuyauterie supportée et un élément tubulaire du système de supportage de l'invention. Ainsi : - d'autres moyens de fixation entre les étriers 20, l'embase 16 et les colliers 22 peuvent être envisagés au lieu d'une coopération entre des trous, des tiges filetées et des écrous ; notamment on peut prévoir des formes complémentaires qui s'encastrent les unes dans les autres par clipsage ou par déformation élastique ;
- les colliers plats 22 peuvent présenter d'autres formes que celle décrite précédemment, c'est-à-dire en forme de Ω. Ainsi, en utilisant, par exemple, une embase de forme générale parallélépipédique dont les quatre coins comportent des saillies traversées par des trous orientés selon une direction appartenant au plan (X, Y), cela permet d'utiliser des colliers plats en forme de U plutôt qu'en forme de Ω.

On se reporte enfin à la figure 6 montrant une platine d'ancrage 2 susceptible d'équiper un système de supportage de l'invention. De telles platines 2 permettent d'installer les portiques 1 selon des points de référence théoriques définis lors des études de supportage, tout en respectant l'intégrité du ferraillage du génie civil des voiles, planchers et/ou plafonds dans lesquels ledit portique est ancré. Ladite platine 2 comporte quatre séries de marques de pointage 9, excentrées. Lesdites marques ont été effectuées en atelier. Les entraxes entre lesdites marques 9 de chacune desdites séries ont été calculés pour la pose de chevilles standards, tout en évitant un fer à béton ; les paramètres diamètre du fer de ferraillage et pas de ferraillage ayant été pris en compte. Les perçages sont à réaliser sur place, en fonction de la position du ferraillage, dans l'une des marques de pointage de chacune des quatre séries ou, à défaut, au centre de chacune des séries. On obtient, en utilisant de telles plaques, une excellente stabilité au niveau de l'ancrage, dans la mesure notamment où quatre points d'ancrage interviennent, de façon symétrique et excentrée.

## Revendications

1. Système de supportage pour tuyauteries (12) en galeries techniques, notamment de l'industrie nucléaire, comprenant au moins un portique (1) constitué de tubes métalliques (14), soudés entre eux et agencés selon une ossature principale (14a+14b+14c+14d) et des barreaux tubulaires (14f) destinés à supporter des tuyauteries (12) à axe longitudinal horizontal ou incliné.

2. Système de supportage selon la revendication 1, **caractérisé en ce que** ledit portique (1) est équipé de moyens (2) pour son ancrage sur le génie civil.

3. Système de supportage selon la revendication 2, **caractérisé en ce que** lesdits moyens d'ancrage (2), solidarisés à l'ossature principale (14a + 14b + 14c + 14d) dudit portique (1), convenant pour un ancrage par chevillage, comprennent des platines (2); lesdites platines (2) comportant au moins une série de marques de pointage (9); les entreaxes entre lesdites marques de pointage (9) de ladite série ayant été calculés pour permettre assurément la pose d'au moins une cheville au travers de l'une desdites marques de pointage (9) de ladite série ou au centre de ladite série.

4. Système de supportage selon la revendication 3, **caractérisé en ce que** lesdites platines (2) comportent au moins deux séries, avantageusement quatre séries, desdites marques de pointage (9); lesdites séries étant avantageusement excentrées et/ou réparties de façon symétrique à la surface desdites platines (2).

5. Système de supportage selon l'une des revendications 3 ou 4, **caractérisé en ce que** chacune desdites séries comporte quatre marques de pointage (9), disposées aux quatre coins d'un carré dont la longueur des côtés est supérieure au diamètre des fers du ferraillage du génie civil et inférieure à la distance entre deux fers dudit ferraillage.

6. Système de supportage selon l'une quelconque des revendications 1 à 5, **caractérisé en ce que** ladite ossature principale est constituée de deux profilés tubulaires horizontaux (14a, 14b) et d'au moins un, avantageusement deux, profilé(s) tubulaire(s) vertical(aux) (14c, 14d) ; des barreaux horizontaux intermédiaires (14f) intervenant :
- selon une série, solidarisés auxdits profilés tubulaires verticaux de ladite ossature principale ou audit profilé tubulaire vertical de ladite ossature principale et à un autre profilé tubulaire vertical solidarisé à ladite ossature principale ;
ou
- selon deux séries adjacentes, solidarisés auxdits profilés tubulaires verticaux (14c, 14d) de ladite ossature principale et à un autre profilé tubulaire vertical intermédiaire (14e) solidarisé à ladite ossature principale, ou, audit profilé tubulaire vertical de ladite ossature principale et à deux autres profilés tubulaires verticaux solidarisés à ladite ossature principale ;
ou
- selon plus de deux séries adjacentes, solidarisés au(x)dit(s) profilé(s) tubulaire(s) vertical(aux) de ladite ossature principale et à des profilés tubulaires verticaux complémentaires solidarisées à ladite ossature principale.

7. Système de supportage selon la revendication 6, **caractérisé en ce que** lesdits deux profilés tubulaires horizontaux (14a, 14b) de ladite ossature principale ont une extrémité libre (6) à laquelle sont fixés lesdits moyens d'ancrage (2).

8. Système de supportage selon l'une quelconque des revendications 1 à 7, **caractérisé en ce que** ledit portique (1) est agencé en partie basse (7), pour permettre la pose d'une structure plancher notamment du type caillebotis.

9. Système de supportage selon l'une quelconque des revendications 1 à 8, **caractérisé en ce qu'**il comprend au moins deux portiques (1,1'), avantageusement au moins trois portiques (1,1',1''), solidarisés entre eux par des raidisseurs horizontaux (8).

10. Système de supportage selon la revendication 9, **caractérisé en ce qu'**il est pré-équipé de tuyauteries (12), avantageusement réparties selon des nappes horizontales et/ou verticales et/ou inclinées.

11. Système de supportage selon l'une quelconque des revendications 1 à 10, **caractérisé en ce que** lesdits tubes (14) dudit portique (1) sont équipés de moyens d'assemblage (10) tube support (14) / tuyauterie supportée (12); lesdits moyens d'assemblage (10) comprenant avantageusement :
- une embase (16) sensiblement plane, avantageusement parallélépipédique, disposée entre ledit tube support (14) et ladite tuyauterie supportée (12); ladite embase (16) étant percée d'au moins deux trous (18);
- des premiers moyens de liaison (20) à serrage réglable entre l'un des tubes : tube support (14), tuyauterie supportée (12) et ladite embase (16); lesdits premiers moyens de liaison (20) entourant partiellement au moins un tronçon dudit tube et coopérant avec lesdits trous (18);
- des deuxièmes moyens de liaison (22) entre l'autre desdits tubes : tube support (14), tuyauterie supportée (12) et ladite embase (16); lesdits deuxièmes moyens de liaison (22) entourant partiellement au moins un tronçon dudit autre tube et coopérant avec lesdits trous (18) et avec lesdits premiers moyens de liaison (20).

12. Système de supportage selon la revendication 11, **caractérisé en ce que** lesdits premiers moyens de liaison desdits moyens d'assemblage (10) comprennent au moins un étrier (20) comportant un arceau plat (26) en forme de U entourant partiellement un desdits tubes et dont les extrémités (26a) sont au contact ou à proximité de l'embase (16) et un arceau de serrage (24) enserrant ledit arceau plat (26) sur tout son contour extérieur, chaque extrémité (24a) dudit arceau de serrage (24) traversant ladite embase (16) au travers d'un desdits trous (18) et présentant des moyens de serrage dudit arceau de serrage (24) par rapport audit arceau plat (26) et **en ce que** lesdits deuxièmes moyens de liaison desdits moyens d'assemblage (10) comprennent au moins un collier plat (22) dont chacune des extrémité (22b) est fixée à l'embase (16) au niveau d'un desdits trous (18) au moyen de l'extrémité (24a) correspondante dudit arceau de serrage (24).

## Patentansprüche

1. Tragsystem für Rohrleitungen (12) in technischen Durchlässen, insbesondere in der kerntechnischen Industrie, mit mindestens einem Rahmen (1), bestehend aus miteinander verschweißten Metallrohren (14), die ein Hauptgerüst (14a, 14b, 14c, 14d) und rohrförmige Streben (14f) bilden, welche zum Tragen von Rohrleitungen (12) mit waagrechter oder schräg geneigter Längsachse bestimmt sind.

2. Tragsystem nach Anspruch 1, **dadurch gekennzeichnet, daß** der Rahmen (1) mit Mitteln (2) zur Verankerung am Mauerwerk versehen ist.

3. Tragsystem nach Anspruch 2, **dadurch gekennzeichnet, daß** die Verankerungsmittel (2), die mit dem Hauptgerüst (14a, 14b, 14c, 14d) des Rahmens (1) fest verbunden und für eine Verankerung mittels Dübeln geeignet sind, Platten (2) enthalten, die mindestens eine Gruppe von Markierungspunkten (9) aufweisen, deren Abstände innerhalb jeder Gruppe so berechnet sind, daß das Setzen mindestens eines Dübels durch einen der Markierungspunkte (9) der Gruppe oder im Zentrum der Gruppe gewährleistet ist.

4. Tragsystem nach Anspruch 3, **dadurch gekennzeichnet, daß** die Platten (2) mindestens zwei, vorzugsweise vier Gruppen von Markierungspunkten (9) besitzen, die vorzugsweise exzentrisch und/oder symmetrisch über die Fläche der Platte (2) verteilt sind.

5. Tragsystem nach einem der Ansprüche 3 und 4, **dadurch gekennzeichnet, daß** jede Gruppe vier Markierungspunkte (9) an den vier Ecken eines Quadrats enthält, dessen Kantenlänge größer als der Durchmesser der Bewehrungseisen des Mauerwerks, aber kleiner als der Abstand zwischen zwei Eisen dieser Bewehrung ist.

6. Tragsystem nach einem beliebigen der Ansprüche 1 bis 5, **dadurch gekennzeichnet, daß** das Hauptgerüst aus zwei waagrechten, rohrförmigen Profilen (14a, 14b) und mindestens einem, vorzugsweise zwei senkrechten rohrförmigen Profilen (14c, 14d) gebildet wird, wobei waagrechte Zwischenstreben (14f)
- entweder gemäß einer Reihe zwischen den senkrechten rohrförmigen Profilen des Hauptgerüsts oder dem senkrechten rohrförmigen Profil des Hauptgerüsts und einem weiteren senkrechten rohrförmigen Profil befestigt sind, das wiederum am Hauptgerüst befestigt ist,
- oder gemäß zwei benachbarten Reihen zwischen den senkrechten rohrförmigen Profilen (14c, 14d) des Hauptgerüsts und einem weiteren senkrechten rohrförmigen Zwischenprofil (14e), das wiederum am Hauptgerüst befestigt ist, oder zwischen dem senkrechten rohrförmigen Profil des Hauptgerüsts und zwei weiteren senkrechten rohrförmigen Profilen befestigt sind, die wiederum am Hauptgerüst befestigt sind,
- oder gemäß mehr als zwei benachbarten Serien zwischen dem senkrechten rohrförmigen Profil oder den senkrechten, rohrförmigen Profilen des Hauptgerüsts und ergänzenden senkrechten rohrförmigen Profilen befestigt sind, die wiederum am Hauptgerüst befestigt sind.

7. Tragsystem nach Anspruch 6, **dadurch gekennzeichnet, daß** die beiden waagrechten rohrförmigen Profile (14a, 14b) des Hauptgerüsts ein freies Ende (6) aufweisen, an dem die Verankerungsmittel (2) befestigt sind.

8. Tragsystem nach einem beliebigen der Ansprüche 1 bis 7, **dadurch gekennzeichnet, daß** der Rahmen (1) im unteren Bereich (7) zur Anbringung einer Bodenstruktur, insbesondere vom Gitterrosttyp, ausgebildet ist.

9. Tragsystem nach einem beliebigen der Ansprüche 1 bis 8, **dadurch gekennzeichnet, daß** es mindestens zwei Rahmen (1, 1'), vorzugsweise drei Rahmen (1, 1', 1") enthält, die miteinander über waagrechte Versteifungen (8) miteinander verbunden sind.

10. Tragsystem nach Anspruch 9, **dadurch gekennzeichnet, daß** es ab Werk mit Rohrleitungen (12) ausgerüstet ist, die vorzugsweise in waagrechte und/oder senkrechte und/oder geneigte Bündel verteilt sind.

11. Tragsystem nach einem beliebigen der Ansprüche 1 bis 10, **dadurch gekennzeichnet, daß** die Rohre (14) des Rahmens (1) mit einer Befestigungsvorrichtung (10) zwischen dem Tragrohr (14) und der getragenen Rohrleitung (12) versehen sind, die vorzugsweise aufweist:
- eine im wesentliche ebene, vorzugsweise rechtwinklige Grundplatte (16), die zwischen dem Tragrohr (14) und der getragenen Rohrleitung (12) liegt und mindestens zwei durchgehende Löcher (18) enthält;
- erste Verbindungsmittel (20) mit einstellbarer Spannkraft zwischen einem der Rohre, nämlich dem Tragrohr (14) oder der getragenen Rohrleitung (12), und der Grundplatte (16), wobei die ersten Verbindungsmittel teilweise mindestens einen Abschnitt des Rohrs umgreifen und mit den Löchern (18) zusammenwirken;
- zweite Verbindungsmittel (22) zwischen dem anderen der beiden Rohre, nämlich dem getragenen Rohr (12) oder dem Tragrohr (14), und der Grundplatte (16), die teilweise mindestens einen Abschnitt des anderen Rohrs umgreifen und mit den Löchern (18) und den ersten Verbindungsmitteln (20) zusammenwirken.

12. Tragsystem nach Anspruch 11, **dadurch gekennzeichnet, daß** die ersten Verbindungsmittel der Befestigungsvorrichtung (10) mindestens einen Bügel (20) mit einem flachen Bogen (26) in Form eines U, der eines der Rohre teilweise umgreift und dessen Enden (26a) mit der Grundplatte (16) in Berührung stehen oder dieser nahekommen, und mit einem Spannbogen (24) aufweisen, der den flachen Bogen (26) über seinen ganzen äußeren Umfang umgibt, wobei jedes Ende (24a) des Spannbogens (24) die Grundplatte (16) durch eines dieser Löcher (18) durchdringt und Spannmittel für den Spannbogen (24) bezüglich des flachen Bogens (26) aufweist, während die zweiten Verbindungsmittel der Befestigungsvorrichtung (10) mindestens eine flache Schelle (22) enthalten, deren beide Enden (22b) an der Grundplatte (16) in Höhe der erwähnten Löcher (18) über das entsprechende Ende (24a) des Spannbogens (24) befestigt sind.

## Claims

1. System for supporting pipes (12) in service galleries, particularly in the nuclear industry, comprising at least one portal frame (1) consisting of metal tubes (14) welded together and set out as a main framework (14a+14b+14c+14d) and tubular rungs (14f) intended to support pipes (12) of a horizontal or inclined longitudinal axis.

2. Support system according to claim 1, **characterized in that** the said portal frame (1) is equipped with means (2) for anchoring it to the structural works.

3. Support system according to claim 2, **characterized in that** the said anchoring means (2) secured to the main framework (14a+14b+14c+14d) of the said portal frame (1) and appropriate for anchoring by fixing studs, comprise mounting plates (2); the said mounting plates (2) comprising at least one series of positioning marks (9); the distances between centres of the said positioning marks (9) of the said series having been calculated to allow at least one stud definitely to be fitted through one of the said positioning marks (9) of the said series or at the centre of the said series.

4. Support system according to claim 3, **characterized in that** the said mounting plates (2) comprise at least two series, advantageously four series, of the said positioning marks (9); the said series advantageously being offset and/or distributed symmetrically at the surface of the said mounting plates (2).

5. Support system according to one of claims 3 or 4, **characterized in that** each of the said series comprises four positioning marks (9) arranged at the four comers of a square the side of which is longer than the diameter of the reinforcing bars in the structural works and shorter than the distance between two of the said reinforcing bars.

6. Support system according to any one of claims 1 to 5, **characterized in that** the said main framework consists of two horizontal tubular sections (14a, 14b) and at least one, advantageously two, vertical tubular section(s) (14c, 14d); intermediate horizontal rungs (14f) occurring:
- in one series, secured to the said vertical tubular sections of the said main framework or to the said vertical tubular section of the said main framework and to another vertical tubular section secured to the said main framework;
or
- in two adjacent series, secured to the said vertical tubular sections (14c, 14d) of the said main framework and to another, intermediate, vertical tubular section (14e) secured to the said main framework, or to the said vertical tubular section of the said main framework and to two other vertical tubular sections secured to the said main framework;
or
- in more than two adjacent series, secured to the said vertical tubular section(s) of the said main framework and to additional vertical tubular sections secured to the said main framework.

7. Support system according to claim 6, **characterized in that** the said two horizontal tubular sections (14a, 14b) of the said main framework have a free end (6) to which the said anchoring means (2) are attached.

8. Support system according to any one of claims 1 to 7, **characterized in that** the said portal frame (1) is designed, at the bottom (7), to allow a floor structure, particularly of the metal grating type, to be fitted.

9. Support system according to any one of claims 1 to 8, **characterized in that** it comprises at least two portal frames (1, 1'), advantageously at least three portal frames (1, 1', 1"), secured together by horizontal stiffeners (8).

10. Support system according to claim 9, **characterized in that** it is pre-equipped with pipes (12), advantageously distributed in horizontal and/or vertical and/or inclined rows.

11. Support system according to any one of claims 1 to 10, **characterized in that** the said tubes (14) of the said portal frame (1) are equipped with means (10) for connecting support tube (14) and supported pipe (12); the said connecting means (10) advantageously comprising:
- an approximately flat, advantageously parallelepipedal, base (16) placed between the said support tube (14) and the said supported pipe (12); the said base (16) being pierced with at least two holes (18);
- first adjustable-tightness means (20) of joining together one of the tubes (support tube (14), supported pipe (12)) and the said base (16); the said first joining means (20) partially surrounding at least a portion of the said tube and interacting with the said holes (18);
- second means (22) of joining together the other of the said tubes (support tube (14), supported pipe (12)) and the said base (16); the said second joining means (22) partially surrounding at least a portion of the said other tube and interacting with the said holes (18) and with the said first joining means (20).

12. Support system according to claim 11, **characterized in that** the first joining means of the said connecting means (10) comprise at least one yoke (20) comprising a flat U-shaped hoop (26) partially surrounding one of the said tubes and the ends (26a) of which are in contact with or close to the base (16), and a clamping hoop (24) gripping the said flat hoop (26) over its entire external periphery, each end (24a) of the said clamping hoop (24) passing through the said base (16) through one of the said holes (18) and having means for tightening the said clamping hoop (24) with respect to the said flat hoop (26) and **in that** the said second joining means of the said connecting means (10) comprise at least one flat collar (22), each of the ends (22b) of which is attached to the base (16) at one of the said holes (18) by means of the corresponding end (24a) of the said clamping hoop (24).
